# EUROPÄISCHE PATENTSCHRIFT

(11) **EP 1 943 856 B1**
(45) Veröffentlichungstag und Bekanntmachung des Hinweises auf die Patenterteilung: **31.03.2010**
(21) Anmeldenummer: 06807677.7
(22) Anmeldetag: 31.10.2006
(51) Int. Cl.: H04W 12/04

(54) **VERFAHREN UND SERVER ZUM BEREITSTELLEN EINES MOBILITÄTSSCHLÜSSELS**
METHOD AND SERVER FOR PROVIDING A MOBILE KEY
SERVEUR ET PROCEDE POUR FOURNIR UNE CLE DE MOBILITE

(30) Priorität: 04.11.2005 DE 102005052717; 02.03.2006 DE 102006009726
(43) Veröffentlichungstag der Anmeldung: 16.07.2008
(73) Patentinhaber: SIEMENS AKTIENGESELLSCHAFT, 80333 München (DE)
(72) Erfinder: FALK, Rainer, 85386 Eching (DE); GÜNTHER, Christian, 85579 Neubiberg (DE); KRÖSELBERG, Dirk, 80469 München (DE)
(86) Internationale Anmeldenummer: PCT/EP2006/067955
(87) Internationale Veröffentlichungsnummer: WO 2007/051787

(56) Entgegenhaltungen:
- WO-A-02/068418
- "3rd Generation Partnership Project; Technical SPecification Group Services and System Aspects; 3GPP system to WIreless Local Area Network (WLAN) interworking; System description (Release 6)" 3GPP TS 23.234 V6.6.0 (2005-09) TECHNICAL SPECIFICATION, [Online] 1. September 2005 (2005-09-01), Seiten 1-80, XP002421430 Gefunden im Internet: URL:http://3gpp.org> [gefunden am 2007-02-21]
- ADRANGI INTEL A LIOR BRIDGEWATER SYSTEMS J KORHONEN TELIASONERA J LOUGHNEY NOKIA F: "Chargeable User Identity" IETF STANDARD-WORKING-DRAFT, INTERNET ENGINEERING TASK FORCE, IETF, CH, Bd. radext, Nr. 6, 12. Oktober 2005 (2005-10-12), XP015042642 ISSN: 0000-0004
- MADJID NAKHJIRI NARAYANAN VENKITARAMAN MOTOROLA LABS: "EAP based Proxy Mobile IP key bootstrapping for WiMAX" IETF STANDARD-WORKING-DRAFT, INTERNET ENGINEERING TASK FORCE, IETF, CH, Januar 2005 (2005-01), XP015044434 ISSN: 0000-0004

## Beschreibung

Die Erfindung betrifft ein Verfahren und einen Authentisierungs-Server zum Bereitstellen eines eindeutig zuordbaren Mobilitätsschlüssels zur kryptographischen Sicherung von Mobilitätssignalisierungsnachrichten für einen Heimagenten eines Mobilfunknetzes, insbesondere für anonyme Teilnehmer.

Das Internet mit dem TCP/IP-Protokoll bietet eine Plattform für die Entwicklung höherer Protokolle für den mobilen Bereich. Da die Internet-Protokolle weit verbreitet sind, kann mit entsprechenden Protokollerweiterungen für mobile Umgebungen ein großer Anwenderkreis erschlossen werden. Die herkömmlichen Internet-Protokolle sind jedoch ursprünglich nicht für den mobilen Einsatz konzipiert. In der Paketvermittlung des herkömmlichen Internets werden die Pakete zwischen stationären Rechnern ausgetauscht, die weder ihre Netzwerkadresse ändern noch zwischen verschiedenen Subnetzen wandern. Bei Funknetzen mit mobilen Rechnern, werden mobile Rechner MS häufig in verschiedene Netzwerke eingebunden. Das DHCP (Dynamic Host Configuration Protocol) ermöglicht mit Hilfe eines entsprechenden Servers die dynamische Zuweisung einer IP-Adresse und weitere Konfigurationsparameter an einen Rechner in einem Netzwerk. Ein Rechner, der in ein Netzwerk eingebunden wird, bekommt automatisch eine freie IP-Adresse durch das DHCP-Protokoll zugewiesen. Hat ein mobiler Rechner DHCP installiert, muss er lediglich in Rechweite eines lokalen Netzwerkes kommen, das die Konfiguration über das DHCP-Protokoll unterstützt. Bei dem DHCP-Protokoll ist eine dynamische Adressvergabe möglich, d.h. eine freie IP-Adresse wird automatisch für eine bestimmte Zeit zugeteilt. Nach Ablauf dieser Zeit muss die Anfrage durch den mobilen Rechner entweder erneut gestellt werden oder die IP-Adresse kann anderweitig vergeben werden.

Mit DHCP kann ein mobiler Rechner ohne manuelle Konfiguration in ein Netzwerk eingebunden werden. Als Voraussetzung muss lediglich ein DHCP-Server zur Verfügung stehen. Ein mobiler Rechner kann so Dienste des lokalen Netzwerkes benutzen und beispielsweise zentral abgelegte Dateien benutzen. Bietet ein mobiler Rechner jedoch selbst Dienste an, kann ein potentieller Dienstnutzer den mobilen Rechner nicht auffinden, da sich dessen IP-Adresse in jedem Netzwerk, in das der mobile Rechner eingebunden wird, ändert. Das gleiche geschieht, wenn sich eine IP-Adresse während einer bestehenden TCP-Verbindung ändert. Dies führt zum Abbruch der Verbindung. Daher bekommt bei Mobile-IP ein mobiler Rechner eine IP-Adresse zugewiesen, die er auch in einem anderen Netzwerk behält. Bei herkömmlichem IP-Netzwechsel ist es nötig, die IP Adressen-Einstellungen entsprechend anzupassen. Eine ständige Anpassung von IP- und Routing-Konfigurationen auf dem Endgerät ist jedoch manuell fast unmöglich. Bei den herkömmlichen automatischen Konfigurationsmechanismen wird die bestehende Verbindung bei einem Wechsel der IP-Adresse unterbrochen. Das MIP-Protokoll (RFC 2002, RFC 2977, RFC3344, RFC3846, RFC3957, RFC3775, RFC3776, RFC4285) unterstützt die Mobilität von mobilen Endgeräten. Bei den herkömmlichen IP-Protokollen muss das mobile Endgerät jedes Mal seine IP-Adresse anpassen, wenn es das IP-Subnetz wechselt, damit die an das mobile Endgerät adressierten Datenpakete richtig geroutet werden. Um eine bestehende TCP-Verbindung aufrecht zu erhalten, muss das mobile Endgerät seine IP-Adresse beibehalten, da ein Adressenwechsel zu einer Unterbrechung der Verbindung führt. Das MIP-Protokoll hebt diesen Konflikt auf, indem es einem mobilen Endgerät bzw. einem Mobile Node (MN) erlaubt, zwei IP-Adressen zu besitzen. Das MIP-Protokoll ermöglicht eine transparente Verbindung zwischen den beiden Adressen, nämlich einer permanenten Home-Adresse und einer zweiten temporären Care-Of-Adresse. Die Care-Of-Adresse ist die IP-Adresse, unter der das mobile Endgerät aktuell erreichbar ist.

Ein Heimagent (Home Agent) ist ein Stellvertreter des mobilen Endgerätes, solange sich das mobile Endgerät nicht in dem ursprünglichen Heimnetz aufhält. Der Heimagent ist ständig über den aktuellen Aufenthaltsort des mobilen Rechners informiert. Der Heimagent stellt üblicherweise eine Komponente eines Routers im Heimnetz des mobilen Endgerätes dar. Wenn das mobile Endgerät sich außerhalb des Heimnetzes befindet, stellt der Heimagent eine Funktion bereit, damit sich das mobile Endgerät anmelden kann. Dann leitet der Heimagent die an das mobile Endgerät adressierten Datenpakete in das aktuelle Subnetz des mobilen Endgerätes weiter.

Ein Fremdagent (Foreign Agent) befindet sich in dem Subnetz, in dem sich das mobile Endgerät bewegt. Der Fremdagent leitet eingehende Datenpakete an das mobile Endgerät bzw. an den mobilen Rechner weiter. Der Fremdagent befindet sich in einem sogenannten Fremdnetz (Visited Network). Der Fremdagent stellt ebenfalls üblicherweise eine Komponente eines Routers dar. Der Fremdagent routet alle administrativen Mobile-Datenpakete zwischen dem mobilen Endgerät und dessen Heimagenten. Der Fremdagent entpackt die von dem Heimagent gesendeten, getunnelten IP-Datenpakete und leitet deren Daten an das mobile Endgerät weiter.

Die Heimadresse des mobilen Endgerätes ist die Adresse, unter der das mobile Endgerät permanent erreichbar ist. Die Heimadresse hat dasselbe Adressenpräfix wie der Heimagent. Die Care-Of-Adresse ist diejenige IP-Adresse, die das mobile Endgerät in dem fremden Netz verwendet.

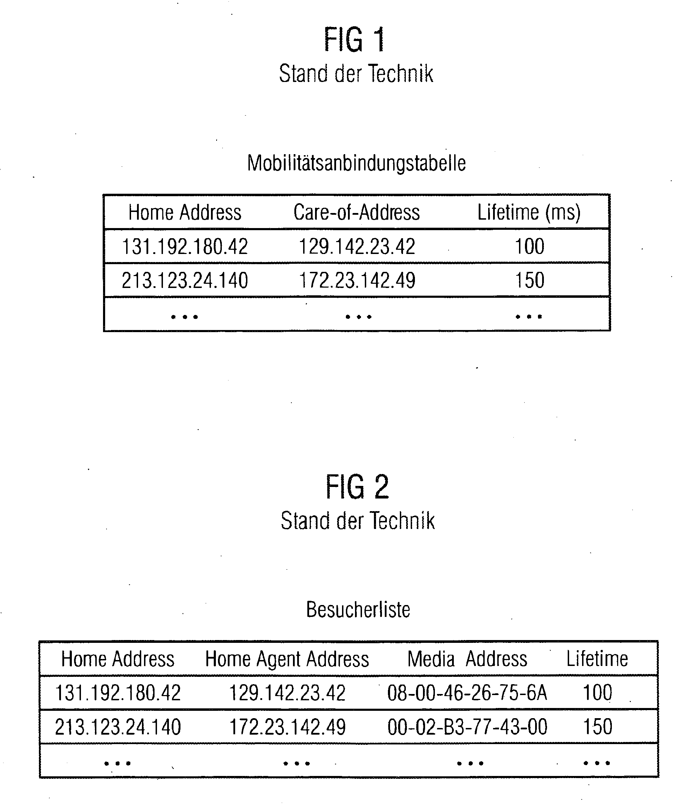

Der Heimagent pflegt eine sogenannte Mobilitätsanbindungstabelle (MBT: Mobility Binding Table). Die Einträge in dieser Tabelle dienen dazu, die beiden Adressen, d.h. die Heimadresse und die Care-Of-Adresse, eines mobilen Endgeräts einander zuzuordnen und die Datenpakete entsprechend umzuleiten. Die MBT-Tabelle enthält Einträge über die Heimadresse, die Care-Of-Adresse und eine Angabe über die Zeitspanne, in der diese Zuordnung gültig ist (Life Time). Figur 1 zeigt ein Beispiel für eine Mobilitätsanbindungstabelle nach dem Stand der Technik.

Der Fremdagent (FA) enthält eine Besucherliste bzw. Visitor List (VL: Visitor List), die Informationen über die mobilen Endgeräte enthält, die sich gerade in dem IP-Netz des Fremdagenten befinden. Figur 2 zeigt ein Beispiel für eine derartige Besucherliste nach dem Stand der Technik.

Damit ein mobiler Rechner in ein Netz eingebunden werden kann, muss er zunächst in Erfahrung bringen, ob er sich in seinem Heim- oder einem Fremdnetz befindet. Zusätzlich muss das mobile Endgerät in Erfahrung bringen, welcher Rechner in dem Subnetz der Heim- bzw. der Fremdagent ist. Diese Informationen werden durch sogenanntes Agent Discovery ermittelt.

Durch die nachfolgende Registrierung kann das mobile Endgerät seinen aktuellen Standort seinem Heimagenten mitteilen. Hierzu sendet der mobile Rechner bzw. das mobile Endgerät dem Heimagenten die aktuelle Care-Of-Adresse zu. Zur Registrierung sendet der mobile Rechner einen Registration-Request bzw. eine Registrierungsanforderung an den Heimagenten. Der Heimagent (HA) trägt die Care-Of-Adresse in seine Liste ein und antwortet mit einem Registration Reply bzw. einer Registrierungsantwort. Hierbei besteht allerdings ein Sicherheitsproblem. Da prinzipiell jeder Rechner an einen Heimagenten eine Registrierungsanforderung schicken kann, könnte man auf einfache Weise einem Heimagenten vorspiegeln, ein Rechner habe sich in ein anderes Netzwerk bewegt. So könnte ein fremder Rechner alle Datenpakete eines mobilen Rechners bzw. mobilen Endgerätes übernehmen, ohne dass ein Sender davon erfährt. Um dies zu verhindern, verfügen der mobile Rechner und der Heim-agent über gemeinsame geheime Schlüssel. Kehrt ein mobiler Rechner in sein Heimatnetzwerk zurück, deregistriert er sich beim Heimagenten, da der mobile Rechner nunmehr alle Datenpakete selbst entgegennehmen kann. Ein mobiles Funknetz muss unter Anderem folgende Sicherheitseigenschaften aufweisen. Informationen dürfen nur für gewünschte Kommunikationspartner zugänglich gemacht werden, d.h. nicht gewünschte Mithörer dürfen keinen Zugriff auf übertragene Daten erhalten. Das mobile Funknetz muss also die Eigenschaft der Vertraulichkeit (Confidentiality) aufweisen. Daneben muss Authentizität gegeben sein. Die Authentizität (Authenticity) erlaubt es einem Kommunikationspartner zweifelsfrei festzustellen, ob eine Kommunikation tatsächlich zu einem gewünschten Kommunikationspartner aufgebaut wurde oder ob sich eine fremde Partei als Kommunikationspartner ausgibt. Authentifizierungen können pro Nachricht oder pro Verbindung durchgeführt werden. Wird auf Basis von Verbindungen authentifiziert, wird nur einmal zu Anfang einer Sitzung (Session) der Kommunikationspartner identifiziert. Man geht dann für den weiteren Verlauf der Sitzung davon aus, dass die folgenden Nachrichten weiterhin von dem entsprechenden Sender stammen. Selbst wenn die Identität eines Kommunikationspartners feststeht, d.h. der Kommunikationspartner authentifiziert ist, kann der Fall auftreten, dass dieser Kommunikationspartner nicht auf alle Ressourcen zugreifen darf bzw. nicht alle Dienste über das Netzwerk benutzen darf. Eine entsprechende Autorisation setzt in diesem Fall eine vorhergehende Authentifizierung des Kommunikationspartners voraus.

Bei mobilen Datennetzen müssen Nachrichten längere Strecken über Luftschnittstellen zurücklegen und sind somit für potentielle Angreifer leicht erreichbar. Bei mobilen und drahtlosen Datennetzen spielen daher Sicherheitsaspekte eine besondere Rolle. Ein wesentliches Mittel zur Erhöhung der Sicherheit in Datennetzwerken stellen Verschlüsselungstechniken dar. Durch die Verschlüsselung ist es möglich, Daten über unsichere Kommunikationswege, beispielsweise über Luftschnittstellen übertragen, ohne dass unbefugte Dritte Zugriff auf die Daten erlangen. Zum Verschlüsseln werden die Daten, d.h. der sogenannte Klartext mit Hilfe eines Verschlüsselungsalgorithmus in Chiffre-Text transformiert. Der verschlüsselte Text kann über den unsicheren Datenübertragungskanal transportiert und anschließend entschlüsselt bzw. dechiffriert werden.

Als eine vielversprechende drahtlose Zugangstechnologie wird WiMax (Worldwide Interoperability for Microwave Access) als neuer Standard vorgeschlagen, der für die Funkübertragung IEEE 802.16 verwendet. Mit WiMax sollen mit Sendestationen ein Bereich von bis zu 50km mit Datenraten von über 100 Mbit pro Sekunde versorgt werden.

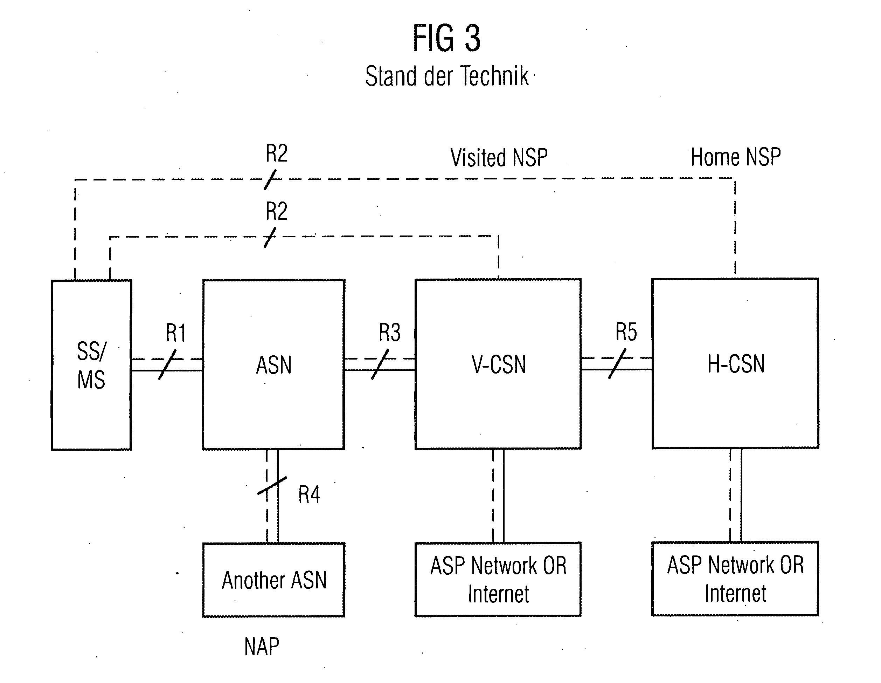

Figur 3 zeigt ein Referenzmodel für ein WiMax-Funknetzwerk. Ein mobiles Endgerät MS befindet sich im Bereich eines Zugangsnetzwerkes (ASN: Access Serving Network). Das Zugangsnetz ASN ist über mindestens ein besuchtes Netz (Visited Connectivity Service Network VCSN) bzw. Zwischennetz mit einem Heimnetz HCSN (Home Connectivity Service Network) verbunden. Die verschiedenen Netzwerke sind über Schnittstellen bzw. Referenzpunkte R miteinander verbunden. Der Heimagent HA der Mobilstation MS befindet sich in dem Heimnetz HCSN oder in einem der besuchten Netze VCSN.

WiMax unterstützt zwei Realisierungsvarianten von Mobile IP, sogenanntes Client MIP (CMIP), bei dem die Mobilstation selbst die MIP-Clientfunktion realisiert, und Proxy-MIP (PMIP), bei dem die MIP-Client-Funktion durch das WiMax-Zugangsnetz realisiert ist. Die dazu im ASN vorgesehene Funktionalität wird als Proxy Mobile Node (PMN) oder als PMIP-Client bezeichnet. Dadurch kann MIP auch mit Mobilstationen verwendet werden, die selbst kein MIP unterstützen.

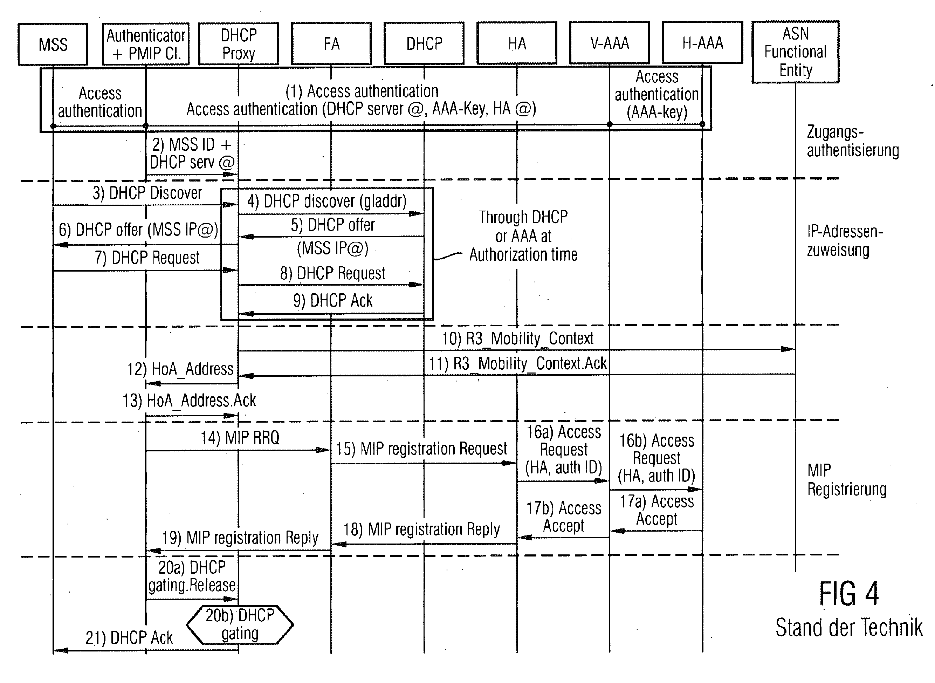

Figur 4 zeigt den Verbindungsaufbau bei Proxy-MIP, wenn sich der Heimagent in dem besuchten Netzwerk befindet nach dem Stand der Technik.

Nach Aufbau einer Funkverbindung zwischen dem mobilen Endgerät und einer Basisstation erfolgt zunächst eine Zugangsauthentisierung. Die Funktion der Authentisierung, der Autorisation und der Buchhaltung erfolgt mittels sogenannter AAA-Servern (AAA: Authentication Authorization and Accounting). Zwischen dem mobilen Endgerät MS und dem AAA-Server des Heimnetzes (HAAA) werden Authentisierungsnachrichten ausgetauscht mittels der die Adresse des Heimagenten und ein Authentisierungsschlüssel gewonnen werden. Der Authentisierungsserver im Heimnetz enthält die Profildaten des Teilnehmers. Der AAA-Server erhält eine Authentisierungsanfragenachricht, die eine Teilnehmeridentität des mobilen Endgerätes enthält. Der AAA-Server generiert nach erfolgreicher Zugangsauthentisierung einen MSK-Schlüssel (MSK: Master Session Key) zum Schutz der Datenübertragungsstrecke zwischen dem mobilen Endgerät MS und der Basisstation des Zugangsnetzwerkes ASN. Dieser MSK-Schlüssel wird von dem AAA-Server des Heimnetzes über das Zwischennetz CSN an das Zugangsnetzwerk ASN übertragen.

Nach der Zugangsauthentisierung wird, wie in Figur 4 zu sehen, der DHCP-Proxy-Server im Zugangsnetzwerk ASN konfiguriert. Falls die IP-Adresse und Host-Konfiguration bereits in der AAA-Antwortnachricht enthalten ist, wird die gesamte Information in den DHCP-Proxy-Server heruntergeladen.

Nach erfolgreicher Authentisierung und Autorisierung sendet die Mobilstation bzw. das mobile Endgerät MS eine DHCP Discovery Nachricht und es erfolgt eine IP-Adressenzuweisung.

Falls das Zugangsnetzwerk ASN sowohl PMIP als auch CMIP Mobilität unterstützt, informiert der Fremdagent die ASN-Handover Funktion, indem es eine R3-Mobilitätskontextnachricht sendet. Bei Netzwerken, die nur PMIP unterstützen kann hierauf verzichtet werden. Nachdem die Heimadresse ausgelesen worden ist, wird diese an den PMIP-Client weitergeleitet.

Anschließend erfolgt eine MIP-Registrierung. Bei der Registrierung wird der Heimagent über den aktuellen Standort des mobilen Endgerätes informiert. Zur Registrierung sendet der mobile Rechner die Registrierungsanforderung an den Heimagenten, die die aktuelle Care-Of-Adresse enthält. Der Heimagent trägt die Care-Of-Adresse in eine von ihm verwaltete Liste ein und antwortet mit einer Registrierungsantwort (Registration Reply). Da prinzipiell jeder Rechner an einen Heimagenten Registrierungsanforderungen schicken kann, könnte auf einfache Weise einem Heimagenten vorgespielt werden, ein Rechner habe sich in ein anderes Netzwerk bewegt. Um dies zu verhindern verfügen sowohl der mobile Rechner als auch der Heimagent über einen gemeinsamen geheimen Schlüssel, nämlich einen MIP-Schlüssel. Falls der Heim-Agent (HA) den MIP-Schlüssel nicht kennt, richtet er ihn ein, wozu er mit einem Heim-AAA-Server kommuniziert.

Nach Abschluss des in Figur 4 dargestellten Verbindungsaufbaus hat das mobile Endgerät eine Heimadresse erhalten und ist bei dem Heimatagenten registriert.

Der herkömmliche Verbindungsaufbau erfolgt im Wesentlichen in drei Schritten, nämlich der Zugangsauthentisierung des Teilnehmers, einer anschließenden IP-Adressenzuweisung und schließlich einer MIP-Registrierung. Bei der.Zugangsauthentisierung meldet sich der Teilnehmer beim Mobilnetz an. Hierzu wird bei einer herkömmlichen Netzwerkanmeldung zunächst eine Funkverbindung zwischen dem mobilen Endgerät MS und dem Zugangnetz ASN aufgebaut, wobei ein Authentisierungsserver H-AAA zur Authentisierung des Teilnehmers mindestens eine Authentisierungsnachricht von dem Teilnehmerendgerät über einen Authentisierungs-Client des Zugangsnetzes empfängt. Diese Authentisierungsnachricht (Access Authentication) enthält unter Anderem eine äußere Teilnehmeridentität bzw. einen Netzwerk-Access-Identifier (NAI). Durch diese äußere NAI ist der Authentisierungsserver H-AAA des Teilnehmers bestimmbar. Bei erfolgreicher Authentisierung benachrichtigt der Authentisierungs-Server H-AAA den Authentisierungs-Client des Zugangsnetzes hierüber, sodass dieses eine gesicherte Funkverbindung zu dem Teilnehmerendgerät einrichtet.

Nach erfolgter IP-Adressenzuweisung wird schließlich die mobile IP-Registrierung durchgeführt. Hierzu empfängt der Heim-agent HA eine Registrierungsanfragenachricht, die eine Teilnehmeridentität beinhaltet, und richtet eine Schlüsselanfrage an den Authentisierungsserver. Nach Empfang einer Schlüsselanfragenachricht (key request) für einen Mobilitätsschlüssel durch den Authentisierungsserver stellt der Authentisierungsserver einen mobilen Schlüssel für den Heimagenten des Teilnehmers zur Verfügung, wenn für die in der Schlüsselanfragenachricht enthaltene Teilnehmeridentität ein zugehöriger Mobilitätsschlüssel in dem Authentisierungsserver gespeichert ist.

Bei einem herkömmlichen Mobilnetz (standard mobile IP) ist der Mobilitätsschlüssel, der zu kryptographischen Sicherung von Mobilitätssignalisierungsnachrichten dient, im Authentisierungsserver H-AAA des Heimnetzes vorkonfiguriert, d. h. für jeden Teilnehmer ist jeweils für seine Teilnehmeridentität ein zugehöriger Mobilitätsschlüssel in dem Authentisierungsserver H-AAA des Heimnetzes gespeichert.

Bei neuartigen Mobilfunknetzen, wie beispielsweise WiMax, wird allerdings bei der Netzwerkanmeldung der Mobilitätsschlüssel im Authentisierungsserver H-AAA erzeugt und gespeichert, d. h. der Mobilitätsschlüssel ist nicht vorkonfiguriert. Wenn bei einem derartigen Mobilfunknetz der Heimagent eines Teilnehmers eine Schlüsselanfragenachricht mit einer darin enthaltenen Teilnehmeridentität an den Authentisierungsserver des Heimnetzes richtet, kann der Authentisierungsserver die in der Schlüsselanfragenachricht enthaltene Teilnehmeridentität nicht zuordnen und kann somit keinen entsprechenden Mobilitätsschlüssel bereitstellen.

Darüber hinaus ist aus der Patentschrift WO 02/068418 A2 (NOKIA CORPORATION) 06.09.2002 ein Verfahren zum Bereitstellen eines Mobilitätsschlüssels bekannt.

Es ist daher die Aufgabe der vorliegenden Erfindung, ein Verfahren und einen Authentisierungsserver zu schaffen, die stets einen Mobilitätsschlüssel für einen sich registrierenden Teilnehmer bereitstellen.

Diese Aufgabe wird erfindungsgemäß durch ein Verfahren mit den im Patentanspruch 1 angegebenen Merkmalen und durch einen Authentisierungsserver mit den im Patentanspruch 22 angegebenen Merkmalen gelöst.

Im Weiteren werden bevorzugte Ausführungsformen des erfindungsgemäßen Verfahrens und des erfindungsgemäßen Authentisierungsservers unter Bezugnahme auf die beigefügten Figuren zur Erläuterung erfindungswesentlicher Merkmale beschrieben.

Es zeigen:
- Figur 1: ein Beispiel für eine Mobilitätsanbindungstabelle nach dem Stand der Technik;
- Figur 2: ein Beispiel für eine Besucherliste nach dem Stand der Technik;
- Figur 3: eine Referenznetzwerkstruktur für ein WiMax- Funknetz;
- Figur 4: einen Verbindungsaufbau bei einem herkömmlichen Wi- Max-Netz nach dem Stand der Technik;
- Figur 5: eine Netzstruktur gemäß einer bevorzugten Ausfüh- rungsform des erfindungsgemäßen Verfahrens;
- Figur 6: ein Ablaufdiagramm zur Erläuterung der Funktions- weise des erfindungsgemäßen Verfahrens;
- Figur 7: ein weiteres Ablaufdiagramm zur Erläuterung der Funktionsweise des erfindungsgemäßen Verfahrens;
- Figur 8: eine Tabelle zur Erläuterung der Funktionsweise des erfindungsgemäßen Verfahrens;
- Figur 9: Datenstrukturen verschiedener bei dem erfindungsge- mäßen Verfahren eingesetzter Datenpakete;
- Figur 10: ein Diagramm zur Erläuterung des erfindungsgemäßen Verfahrens.

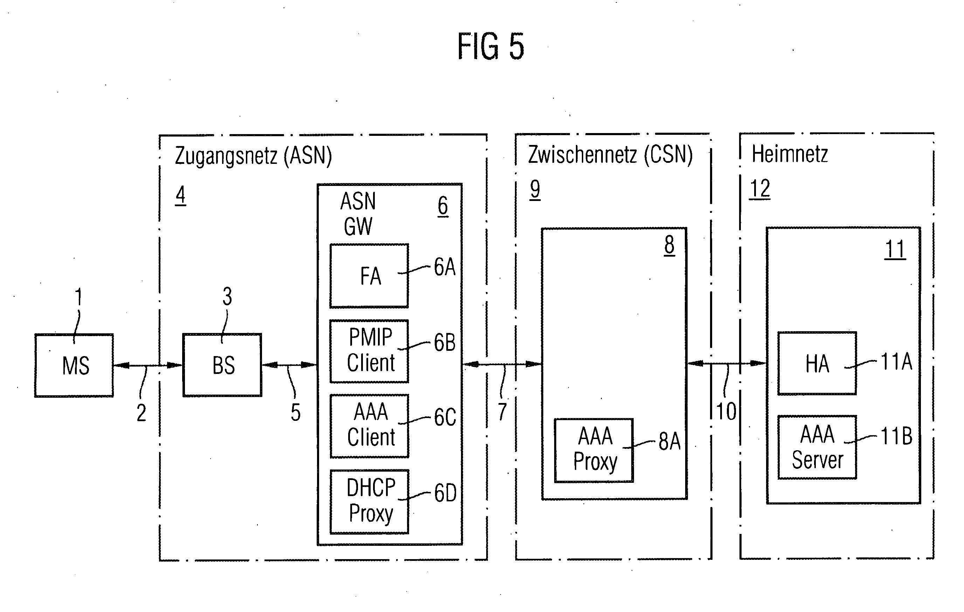

Wie man aus Figur 5 erkennen kann ist ein mobiles Endgerät 1 über eine drahtlose Schnittstelle 2 mit einer Basisstation 3 eines Zugangsnetzes 4 verbunden. Bei dem mobilen Endgerät 1 handelt es sich um ein beliebiges mobiles Endgerät, beispielsweise einen Laptop, einen PDA, ein Mobiltelefon, oder ein sonstiges mobiles Endgerät. Die Basisstation 3 des Zugangsnetzes 4 ist über eine Datenübertragungsleitung 5 mit einem Zugangsnetzwerk-Gateway 6 verbunden. In dem Zugangs-Gateway-Rechner 6 sind vorzugsweise weitere Funktionalitäten integriert, insbesondere ein Fremdagent 6A, ein PMIP-Client 6B, ein AAA-Client-Server 6C und ein DHCP-Proxy-Server 6D.

Der Fremdagent 6A ist ein Router, der Routing-Dienste für das mobile Endgerät 1 zur Verfügung stellt. Die an das mobile Endgerät 1 gerichteten Datenpakete werden getunnelt übertragen und von dem Fremdagenten 6A entpackt.

Das Gateway 6 des Zugangsnetzes 4 ist über eine Schnittstelle 7 mit einem Rechner 8 eines Zwischennetzes 9 verbunden. Der Rechner 8 enthält vorzugsweise einen AAA-Proxy-Server. Ein Heimagent 11A befindet sich in einem Heimnetz 12 innerhalb eines Rechners 11 und ist der Stellvertreter des mobilen Endgerätes 1. Der Heimagent 11A ist ständig über den aktuellen Aufenthaltsort des mobilen Rechners 1 informiert. Datenpakete für das mobile Endgerät 1 werden zunächst an den Heimagenten 11A übertragen und von dem Heimagenten 11A aus getunnelt an den Fremdagenten 6A weitergeleitet. Umgekehrt können Datenpakete, die von dem mobilen Endgerät 1 ausgesendet werden, direkt an den jeweiligen Kommunikationspartner gesendet werden. Die Datenpakete des mobilen Endgerätes 1 enthalten dabei die Heimadresse als Absenderadresse. Die Heimadresse hat dasselbe Adresspräfix, d.h. Netzadresse und Subnetzadresse, wie der Heimagent 11A. Datenpakete, die an die Heimadresse des mobilen Endgerätes 1 gesendet werden, werden von dem Heimagenten 11A abgefangen und getunnelt von dem Heimagenten 11A an die Care-of-Adresse des mobilen Endgerätes 1 übertragen und schließlich an dem Endpunkt des Tunnels, d.h. durch den Fremdagenten 6A oder das mobile Endgerät 1 selbst empfangen.

Der Rechner 8 des Zwischennetzes 9 ist über eine weitere Schnittstelle 10 mit einem Authentisierungsserver 11B des Heimnetzes 12 verbunden. Bei dem Heimnetz 12 handelt es sich beispielsweise um ein 3GPP-Netz für UMTS. Bei einer alternativen Ausführungsform handelt sich bei dem Server 11B um einen Authentisierungsserver eines WLAN-Netzes.

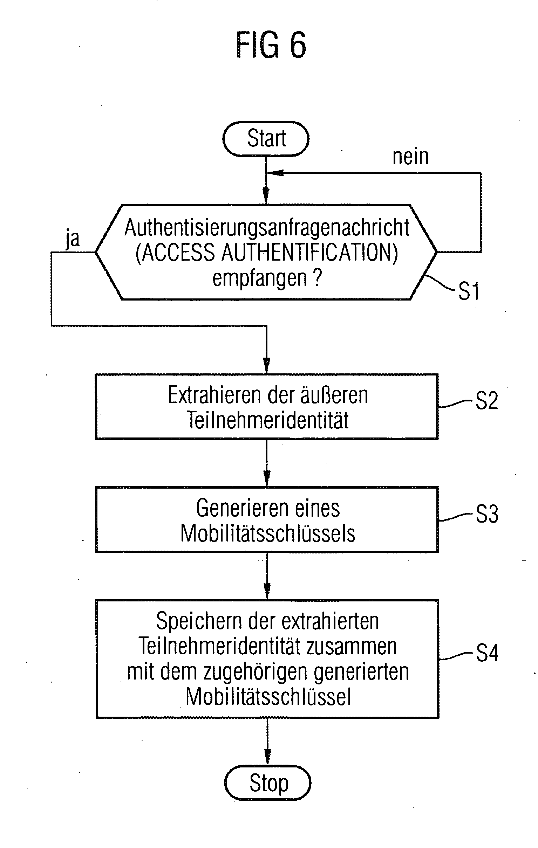

Figur 6 zeigt ein Ablaufdiagramm zur Erläuterung einer bevorzugten Ausführungsform des erfindungsgemäßen Verfahrens. Der Authentisierungsserver 11A, welcher sich vorzugsweise in einem Heimnetz 12 des Teilnehmers befindet, überwacht in einem

Schritt S1 ständig bzw. in regelmäßigen Zeitabständen, ob er eine Authentisierungsanfragenachricht (access authentication) empfängt.

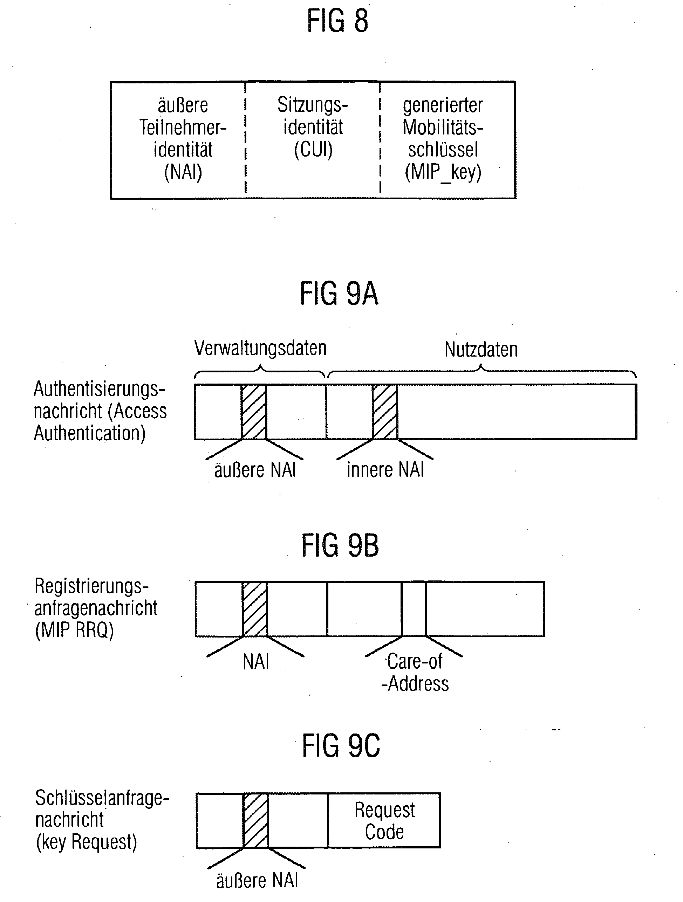

Die Datenstruktur einer derartigen Authentisierungsnachricht ist in Figur 9A dargestellt. Bei einer bevorzugten Ausführungsform werden die Authentisierungsnachrichten durch Datenpakete gebildet, wobei die Verwaltungsdaten jeweils eine äußere Teilnehmeridentität NAI enthalten und die Nutzdaten vorzugsweise einen innere Teilnehmeridentität beinhalten. Die äußere Teilnehmeridentität NAI wird zum Routen des Datenpaketes zu dem Authentisierungsserver 11B des Heimnetzes 12 verwendet. Bei der äußeren Teilnehmeridentität handelt es sich vorzugsweise um einen sogenannten Netzwerkzugriffsidentifizierer NAI (network access identifier). Bei dem Netzwerkzugriffsidentifizierer NAI kann es sich beispielsweise um eine anonyme Teilnehmeridentität handeln (z. B. "Guest") oder um eine vom Teilnehmer gewählte pseudonyme Teilnehmeridentität (z. B. "Superman" oder "1274O3L"). Auch ein spezifischer Benutzername (user name) kann als äußere Teilnehmeridentität in der Authentisierungsnachricht enthalten sein. Bei einer möglichen Ausführungsform wird die äußere Teilnehmeridentität durch einen kryptographischen Hash-Funktionswert H(r) gebildet, wobei r beispielsweise eine Zufallszahl oder eine zufällig gewählte Zeichenkette ist.

Die in den Nutzdaten der Authentisierungsnachricht enthaltene innere Teilnehmeridentität, wie sie in Figur 9A dargestellt ist, wird beispielsweise durch einen eindeutigen Teilnehmernamen (user name) oder durch eine Telefonnummer (IMSI, International Mobile Subscriber Identity; oder MSISDN Mobile Station international PSTN/ISDN number) gebildet.

Empfängt der Authentisierungsserver 11B eine Authentisierungsnachricht, wie sie in Figur 9A dargestellt ist, extrahiert er im Schritt S2 die darin enthaltene äußere Teilnehmeridentität NAI.

Anschließend generiert der Authentisierungsserver 11B im Schritt S3 einen Mobilitätsschlüssel (MIP key). Das Generieren des Mobilitätsschlüssels kann in beliebiger Weise erfolgen. Beispielsweise wird der Mobilitätsschlüssel als Zufallszahl generiert.

Bei einer alternativen Ausführungsform wird der Mobilitätsschlüssel im Rahmen der Netzzugangsauthentisierung unter Verwendung eines kryptographischen Schlüsselvereinbarungsprotokolls eingerichtet. Bekannte kryptographische Schlüsselvereinbarungsprotokolle sind beispielsweise EAP-SIM, EAP-AKA und EAP-TLS.

Bei einer alternativen Ausführungsform wird der Mobilitätsschlüssel aus der extrahierten äußeren Teilnehmeridentität entsprechend einer beliebigen Ableitungsfunktion AF abgeleitet.

In einem Schritt S4 speichert der Authentisierungsserver 11B die extrahierte Teilnehmeridentität NAI zusammen mit dem zugehörigen generierten Mobilitätsschlüssel (MIP_key) ab. Der in Figur 6 dargestellte Ablauf erfolgt während der Netzwerkanmeldung bzw. Authentisierung des Teilnehmers.

Figur 8 zeigt schematisch die nach dem Vorgang in Figur 6 in dem Authentisierungsserver 11B abgespeicherten Informationen. Der Authentisierungsserver 11B speichert intern die extrahierte äußere Teilnehmeridentität NAI und jeweils dazu einen generierten Mobilitätsschlüssel MIP key.

Bei einer bevorzugten Ausführungsform wird zusätzlich zu der äußeren Teilnehmeridentität NAI eine Sitzungsidentität (session ID) des Teilnehmers gespeichert, wobei es sich beispielsweise um eine Abrechnungsidentität zur Abrechnung von Kosten CUI (chargeable user ID) des Teilnehmers handeln kann. Diese chargeable user ID wird dem Radius-Client (network access server) von dem Authentisierungsserver im Rahmen der Netzwerkanmeldung übermittelt. Die chargeable user ID CUI bzw. Abrechnungsidentität, die vorzugsweise als sitzungsspezifische Identität des Teilnehmers eingesetzt wird, wird in dem mobile IP request und in einem Radius access request von dem Fremdagenten 6A an den Authentisierungsserver 11B eingetragen. Der Eintrag erfolgt durch den Fremdagenten 6A bzw. PMN (PMIP client) und nicht durch den Client-Server der Mobile Station MS, da dieser die chargeable user ID nicht kennt. Dies ist bei PMIP möglich, da der registration request bzw. die Registrierungsanfragenachricht bei PMIP nicht vom Client-Server gesendet wird. Der Authentisierungsserver 11B verwaltet den Zustandsdatensatz für die chargeable user ID und den zugeordneten MIP-Schlüssel, um bei einer Anfrage durch den Heimagenten 11A den passenden Mobilitätsschlüssel zu liefern. Das Vorsehen einer Sitzungs-ID bzw. -CUI ist bei dem erfindungsgemäßen Verfahren optional.

Nach der Zugangsauthentisierung und der anschließenden IP-Adressenzuweisung erfolgt zu einem späteren Zeitpunkt die MIP-Registrierung des Teilnehmers. Hierzu sendet der Teilnehmer bei seiner Registrierung bei einem Heimagenten 11A eine Registrierungsanfragenachricht (MIP RRQ), welche eine Teilnehmeridentität des Teilnehmers enthält. Die Struktur einer derartigen Registrierungsanfragenachricht ist in Figur 9 dargestellt. Die Registrierungsanfragenachricht besteht dabei vorzugsweise aus einem Datenpaket, das unter Anderem eine Teilnehmeridentität NAI und die aktuelle Care-of-Adresse des Teilnehmers beinhaltet. Der Heimagent 11A des Teilnehmers empfängt die Registrierungsanfragenachricht und leitet aus der Teilnehmeridentität gemäß einer konfigurierbaren Ableitungsfunktion AF eine Mobilitätsidentität des sich registrierenden Teilnehmers ab.

Bei einer alternativen Ausführungsform wird die Mobilitätsidentität des Teilnehmers aus der in der Registrierungsanfragenachricht enthaltenen Teilnehmeridentität NAI und einer Sitzungsidentität des Teilnehmers gemäß einer weiteren konfigurierbaren Ableitungsfunktion AF abgeleitet. Bei den Ableitungsfunktionen AF kann es sich um beliebige Funktionen handeln.

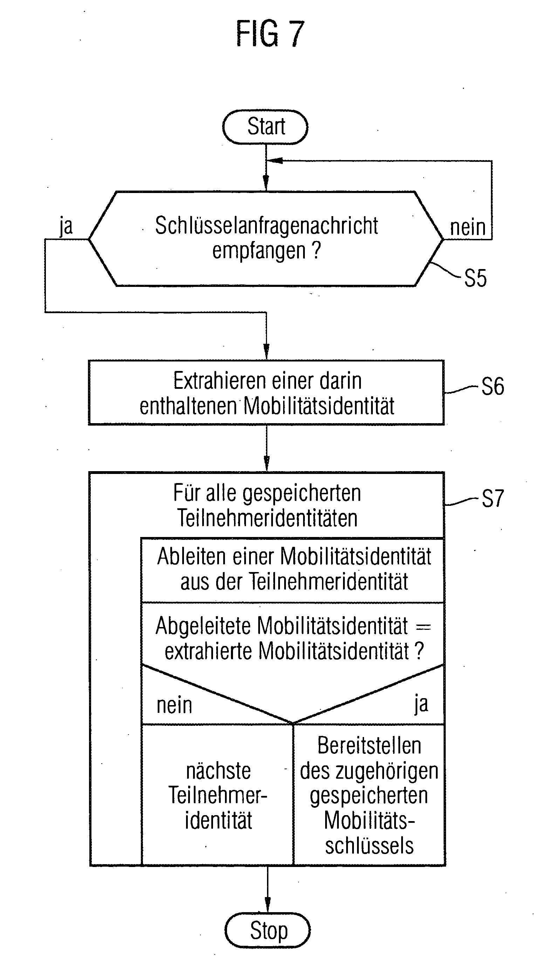

Der Heimagent 11A sendet eine Schlüsselanfragenachricht (Key_request) an den Authentisierungsserver 11B. Der Authentisierungsserver 11B überwacht, wie in Figur 7 zu sehen, ständig, ob er eine Schlüsselanfragenachricht empfängt. Die Datenstruktur einer derartigen Schlüsselanfragenachricht ist beispielsweise in Figur 9C dargestellt. Die Schlüsselanfragenachricht wird vorzugsweise durch ein Datenpaket gebildet, das als äußere Teilnehmeridentität NAI die von dem Heimagenten 11A aus der Registrierungsanfragenachricht extrahierte Mobilitätsidentität enthält. D Das Datenpaket ist als Schlüsselanfragenachricht (key request) gekennzeichnet.

Der Authentisierungsserver 11A extrahiert im Schritt S6 die in der Schlüsselanfragenachricht enthaltene Mobilitätsidentität (MIP_ID).

Anschließend sucht der Authentisierungsserver 11B in einem Schritt S7 nach einem Teilnehmer, der eine identische bzw. eindeutig zuordenbare Mobilitätsidentität aufweist, die gemäß der vorgegebenen Ableitungsfunktion AF aus einer in dem Authentisierungsserver 11B im Schritt S4 gespeicherten Teilnehmeridentität ableitbar ist. Hierzu leitet der Authentisierungsserver 11B für jede von ihm gespeicherte Teilnehmeridentität gemäß der vorgegebenen Ableitungsfunktion eine entsprechende Mobilitätsidentität MIP_ID ab und vergleicht diese mit der extrahierten Mobilitätsidentität MIP_ID. Sobald der Authentisierungsserver 11B einen Teilnehmer findet, dessen abgeleitete Mobilitätsidentität MIP_ID mit der extrahierten Mobilitätsidentität MIP_ID identisch bzw. eindeutig zuordenbar ist, stellt er dem Heimagenten 11A den dazu gespeicherten Mobilitätsschlüssel (MIP key) zur kryptographischen Sicherung von Mobilitätssignalisierungsnachrichten des registrierten Teilnehmers zur Verfügung.

Die in den Figuren 6, 7 dargestellten Abläufe lassen sich wie folgt zusammenfassen. Als erstes wird während der Netzanmeldung des Teilnehmers ein generierter Mobilitätsschlüssel MIP_KEY zusammen mit der äußeren Teilnehmeridentität NAI durch den Authentisierungsserver 11B gespeichert.

Extract NAI from Access Authentication Message
Generate MIP_Key
Store (NAI, MIP_Key)

Anschließend wird während der MIP-Registrierung des Teilnehmers durch den Authentisierungsserver 11B ein eindeutig zugeordneter Mobilitätsschlüssel (MIP_KEY) bereitgestellt.

Extract MIP_ID from Key Request Message
For all NAI MIP_ID' = function (NAI)
IF MIP_ID' = MIP_ID THEN OUTPUT MIP_KEY

Bei einer alternativen Ausführungsform leitet der Authentisierungsserver 11B, anstatt dem in Fig. 7 dargestellten Schritt S7, aus der gespeicherten Teilnehmeridentität unter Verwendung einer ersten Ableitungsfunktion und aus der Mobilitätsidentität unter Verwendung einer zweiten Ableitungsfunktion jeweils eine Identität ab und vergleicht diese. Sobald der Authentisierungsserver 11B einen Teilnehmer findet, dessen aus der Mobilitätsidentität MIP_ID abgeleitete Identität mit der aus der extrahierten Mobilitätsidentität MIP_ID abgeleiteten Identität identisch ist, stellt er dem Heimagenten 11A den dazu gespeicherten Mobilitätsschlüssel (MIP key) zur kryptographischen Sicherung von Mobilitätssignalisierungsnachrichten des registrierten Teilnehmers zur Verfügung.

Extract MIP_ID from Key Request Message
For all NAI MIP_ID' = function1 (NAI)
IF MIP_ID' = function2 (MIP_ID) THEN OUTPUT MIP_KEY

Bei einer weiteren alternativen Ausführungsform stellt der Authentisierungsserver 11B, anstatt dem in Fig. 7 dargestellten Schritt S7, denjenigen Mobilitätsschlüssel bereit, der zu derjenigen äußeren Teilnehmeridentität abgespeichert ist, die aus der Mobilitätsidentität gemäß einer vorgegebenen konfigurierbaren Ableitungsfunktion ableitbar ist.

Extract MIP_ID from Key Request Message
For all NAI MIP_ID' = NAI
IF MIP_ID' = function (MIP_ID) THEN OUTPUT MIP_KEY

Das erfindungsgemäße Verfahren eignet sich insbesondere bei WiMax-Mobilfunknetzen.

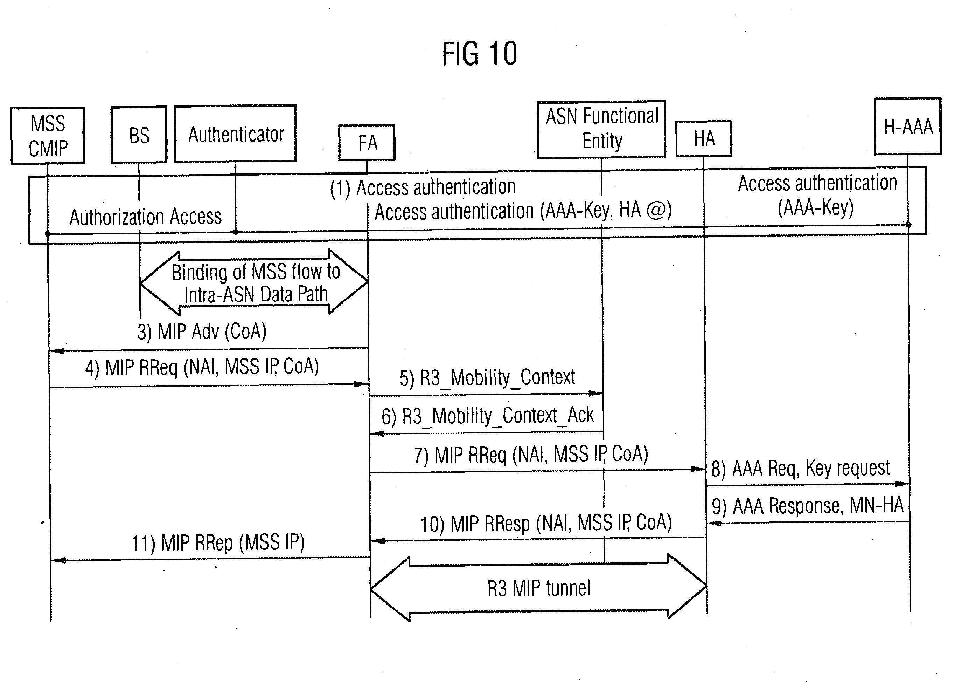

Figur 10 zeigt ein Diagramm zur Erläuterung des Verbindungsaufbaus für Client-MIP in dem erfindungsgemäßen Verfahren.

Die Teilnehmeridentität des Teilnehmers wird bei einer Ausführungsform des erfindungsgemäßen Verfahrens durch das mobile Teilnehmerendgerät 1 oder durch einen PMIP-Client des Zugangsnetzes 4 gebildet. Die generierte Teilnehmeridentität kann durch einen Authentisierungs-Client 6C oder durch einen Fremdagenten des Zugangsnetzes 4 modifiziert werden.

## Patentansprüche

1. Verfahren zum Bereitstellen mindestens eines Mobilitätsschlüssels zur kryptographischen Sicherung von Mobilitätssignalisierungsnachrichten,
wobei bei einer Netzanmeldung eines Teilnehmers der Mobilitätsschlüssel generiert wird,
wobei eine spätere Registrierung des Teilnehmers bei einem Heimagenten (11A) mittels einer Mobilitätsidentität des Teilnehmers erfolgt, die dem generierten Mobilitätsschlüssel in einem Authentisierungsserver (11B) eindeutig zugeordnet wird,
wobei bei der Netzanmeldung mindestens eine Authentisierungsnachricht, welche eine äußere Teilnehmeridentität des Teilnehmers enthält, von dem Authentisierungsserver empfangen wird, und
wobei der Authentisierungsserver (11B) dem Heimagenten (11A) bei Empfang einer Schlüsselanfragenachricht
welche eine Mobilitätsidentität enthält, denjenigen generierten Mobilitätsschlüssel bereitstellt, der zu derjenigen äußeren Teilnehmeridentität abgespeichert ist, aus der eine identische Mobilitätsidentität gemäß einer vorgegebenen konfigurierbaren Ableitungsfunktion ableitbar ist.

2. Verfahren nach Anspruch 1,
wobei der Authentisierungsserver (11B) nach Empfang der Authentisierungsnachricht mindestens einen Mobilitätsschlüssel für den Teilnehmer generiert und zusammen mit der in der Authentisierungsnachricht enthaltenen äußeren Teilnehmeridentität speichert.

3. Verfahren nach Anspruch 2,
wobei der Authentisierungsserver (11B) zusätzlich eine Sitzungsidentität des Teilnehmers zu dem generierten Mobilitätsschlüssel und zu der äußeren Teilnehmeridentität des Teilnehmers speichert.

4. Verfahren nach Anspruch 1,
wobei der Teilnehmer bei der Registrierung bei dem Heimagenten (11A) eine Registrierungsanfragenachricht welche die Teilnehmeridentität des Teilnehmers enthält, an den Heimagenten (11A) sendet.

5. Verfahren nach Anspruch 4,
wobei eine Mobilitätsidentität des Teilnehmers von der in der Registrierungsanfragenachricht enthaltenen Teilnehmeridentität gemäß einer konfigurierbaren Ableitungsfunktion abgeleitet wird.

6. Verfahren nach Anspruch 4,
wobei eine Mobilitätsidentität des Teilnehmers von einer in der Registrierungsanfragenachricht enthaltene Teilnehmeridentität und von einer Sitzungsidentität des Teilnehmers gemäß einer konfigurierbaren Ableitungsfunktion abgeleitet wird.

7. Verfahren nach Anspruch 3,
wobei die Sitzungsidentität durch eine Abrechnungsidentität des Teilnehmers gebildet wird.

8. Verfahren nach Anspruch 1,
wobei die äußere Teilnehmeridentität durch einen Netzwerkzugriffsidentifizierer gebildet wird.

9. Verfahren nach Anspruch 1,
wobei die äußere Teilnehmeridentität durch einen anonymen Netzwerkzugriffsidentifizierer gebildet wird.

10. Verfahren nach Anspruch 1,
wobei die äußere Teilnehmeridentität durch einen sitzungsspezifisch gewählten pseudonymen Netzwerkzugriffsidentifizierer gebildet wird.

11. Verfahren nach Anspruch 1,
wobei die äußere Teilnehmeridentität durch einen Hash-Funktionswert einer Mobilitätsidentität gebildet wird.

12. Verfahren nach Anspruch 1,
wobei die Mobilitätsidentität durch einen Hash-Funktionswert einer äußeren Teilnehmeridentität gebildet wird.

13. Verfahren nach Anspruch 1,
wobei die Teilnehmeridentität durch ein mobiles Teilnehmerendgerät (1) oder durch einen PMIP-Client (6B) eines Zugangsnetzes (4) gebildet wird.

14. Verfahren nach Anspruch 1,
wobei die generierte Teilnehmeridentität von einem Authentisierungsclient (6C) oder einem Fremdagenten (6A) eines Zugangsnetzes (4) modifiziert wird.

15. Verfahren nach Anspruch 1,
wobei die Authentisierungsnachricht durch ein Datenpaket gebildet wird dessen Verwaltungsdaten die äußere Teilnehmeridentität enthalten und dessen Nutzdaten eine teilnehmerspezifische innere Teilnehmeridentität enthalten.

16. Verfahren nach Anspruch 14,
wobei die innere Teilnehmeridentität durch einen eindeutigen Teilnehmernamen gebildet wird.

17. Verfahren nach Anspruch 14,
wobei die innere Teilnehmeridentität durch eine vorgegebenen Telefonnummer gebildet wird.

18. Verfahren nach Anspruch 14,
wobei die äußere Teilnehmeridentität eine Adresse zum Routen des Datenpaketes zu dem Authentisierungsserver (11B) bildet.

19. Verfahren nach Anspruch 4,
wobei die Registrierungsanfragenachricht durch ein Datenpaket gebildet wird, das die äußere Teilnehmeridentität enthält und das eine dem Teilnehmer zugewiesene aktuelle Care-of-Adresse enthält.

20. Verfahren nach Anspruch 12,
wobei die Schlüsselanfragenachricht durch ein Datenpaket gebildet wird dessen Verwaltungsdaten die Mobilitätsidentität enthalten.

21. Verfahren nach Anspruch 1 oder 14,
wobei das Zugangsnetz (4) durch ein Wimax-Netz gebildet wird.

22. Authentisierungsserver zum Bereitstellen eines Mobilitätsschlüssels,
wobei der Authentisierungsserver (11B) bei Empfang einer während einer Netzanmeldung eines Teilnehmers übertragenen Authentisierungsnachricht eine darin enthaltene Teilnehmeridentität des Teilnehmers extrahiert und einen zugehörigen Mobilitätsschlüssel generiert, der zusammen mit der jeweils extrahierten Teilnehmeridentität gespeichert wird,
wobei der Authentisierungsserver (11B) bei einem späteren Empfang einer während einer Registrierung eines Teilnehmers übertragenen Schlüsselanfragenachricht eine darin enthaltene Mobilitätsidntität des Teilnehmers extrahiert und nach einer Mobilitätsidentität sucht, die gemäß einer konfigurierbaren Ableitungsfunktion aus einer der in dem Authentisierungsserver (11B) gespeicherten Teilnehmeridentitäten ableitbar ist, und wobei der Authentisierungsserver (11B) bei Auffinden einer abgeleiteten Mobilitätsidentität die zu der extrahierten Mobilitätsidentität zuordenbar ist, den gespeicherten zugehörigen generierten Mobilitätsschlüssel zur kryptographischen Sicherung von Mobilitätssignalisierungsnachrichten des registrierten Teilnehmers bereitstellt.

23. Authentisierungsserver nach Anspruch 22,
wobei die Teilnehmeridentität eine in Verwaltungsdaten der Authentisierungsnachricht enthaltene äußere Teilnehmeridentität ist, die zum Routen der Authentisierungsnachricht zu dem Authentisierungsserver vorgesehen ist.

24. Authentisierungsserver nach Anspruch 22,
wobei der Authentisierungsserver in einem Heimnetz des Teilnehmers vorgesehen ist.

## Claims

1. A method for providing at least one mobility key for the cryptographic protection of mobility signalling messages, with the mobility key being generated when a subscriber registers with the network and
with a subsequent registration of a subscriber with a home agent (11A) being undertaken by means of a mobility identity of the subscriber which is uniquely assigned to the generated mobility key in an authentication server (11B).
with at least one authentication message which contains an external subscriber identity of the subscriber being received by the authentication server on registration with the network, and
with the authentication server (11B) providing the home agent (11A), on receiving a key request message which contains a mobility identity, with that generated mobility key that is stored for that external subscriber identity from which an identical mobility identity in accordance with a predeterminable configurable derivation function is able to be derived.

2. Method according to claim 1,
with the authentication server (11B), after receiving the access authentication, generating at least one mobility key for the subscriber and storing it together with the external identity contained in the access authentication.

3. Method according to claim 2,
with the authentication server (11B) additionally storing a session identity of the subscriber for the generated mobility key and for the external subscriber identity of the subscriber.

4. Method according to claim 1,
with the subscriber, on registration with the home agent (11A) sending a registration request message which contains a subscriber identity of the subscriber, to the home agent (11A).

5. Method according to claim 4,
with a mobility identity of the subscriber being derived from a subscriber identity contained in the registration request message in accordance with a configurable derivation function.

6. Method according to claim 4,
with a mobility identity of the subscriber being derived from a subscriber identity contained in the registration request message and from a session identity of the subscriber in accordance with a configurable derivation function.

7. Method according to claim 3,
with the session identity being formed by a chargeable subscriber identity of the subscriber.

8. Method according to claim 1,
with the external subscriber identity been formed by a network access identifier.

9. Method according to claim 1,
with the external subscriber identity been formed by an anonymous network access identifier.

10. Method according to claim 1,
with the external subscriber identity being formed by a session-specific pseudonymous network access identifier.

11. Method according to claim 2,
with the external subscriber identity being formed by a hash function value of a mobility identity.

12. Method according to claim 1,
with the mobility identity been formed by a hash function value of an external subscriber identity.

13. Method according to claim 1,
with the subscriber identity being formed by a mobile subscriber station (1) or by a PMIP client (6B) of an access network (4).

14. Method according to claim 1,
with the generated subscriber identity being modified by an authentication client (6C) or a foreign agent (6A) of an access network (4).

15. Method according to claim 1,
with the access authentication being formed by a data packet of which the administration data contains the external subscriber identity and of which the payload data contains a subscriber-specific internal subscriber identity.

16. Method according to claim 14,
with the internal subscriber identity being formed by a unique subscriber name.

17. Method according to claim 14,
with the internal subscriber identity being formed by a predetermined telephone number.

18. Method according to claim 14,
with the external subscriber identity forming an address for routing the data packet to the authentication server (11B).

19. Method according to claim 4,
with the registration request message being embodied by a data packet which contains the external subscriber identity and which contains a current care-of address assigned to the subscriber.

20. Method according to claim 12,
with the key request being embodied by a data packet of which the administration data contains the mobility identity.

21. Method according to claim 1 or 14,
with the access network (4) being formed by a Wimax network.

22. An authentication server for providing a mobility key, with the authentication server (11B), on receiving an access authentication transmitted by a subscriber during registration with the network, extracting a subscriber identity of the subscriber contained therein and generating an associated mobility key which is stored together with the respective subscriber identity extracted,
with the authentication server (11B) on subsequent receipt of a key request transmitted during a registration of a subscriber, extracting a mobility identity of the subscriber contained therein and searching for a mobility identity which is able to be derived in accordance with a configurable derivation function from one of the subscriber identities stored in the authentication server (11B), and
with the authentication server (11B), when it finds a derived mobility identity which is able to be assigned to the extracted mobility identity, providing the stored associated generated mobility key for cryptographic protection of mobility signalling messages of the registered subscriber.

23. The authentication server as claimed in claim 22,
with the subscriber identity being an external subscriber identity contained in administration data of the access authentication which is intended for routing the access authentication to the authentication server.

24. The authentication server as claimed in claim 22,
with the authentication server being provided in a home network of the subscriber.

## Revendications

1. Procédé pour fournir au moins une clé de mobilité pour la protection cryptographique de messages de signalisation de mobilité,
la clé de mobilité étant générée lors d'un enregistrement d'un abonné dans un réseau,
un enregistrement ultérieur de l'abonné auprès d'un agent domestique (11A) se déroulant au moyen d'une identité de mobilité de l'abonné qui est associée de manière univoque à la clé de mobilité générée dans un serveur d'authentification (11B),
au moins un message d'authentification qui contient une identité d'abonné extérieure de l'abonné étant reçu par le serveur d'authentification lors de l'enregistrement dans le réseau et
le serveur d'authentification (11B) mettant à disposition de l'agent domestique (11A), lors de la réception d'un message de demande de clé contenant une identité de mobilité, la clé de mobilité générée qui est enregistrée en rapport avec l'identité d'abonné extérieure à partir de laquelle une identité de mobilité identique peut être dérivée selon une fonction de dérivation configurable prédéfinie.

2. Procédé selon la revendication 1,
le serveur d'authentification (11B) générant au moins une clé de mobilité pour l'abonné après réception du message d'authentification et l'enregistrant avec l'identité d'abonné extérieure contenue dans le message d'authentification.

3. Procédé selon la revendication 2,
le serveur d'authentification (11B) enregistrant, en plus, une identité de session de l'abonné en rapport avec la clé de mobilité générée et avec l'identité d'abonné extérieure de l'abonné.

4. Procédé selon la revendication 1,
l'abonné envoyant à l'agent domestique (11A), lors de l'enregistrement auprès de l'agent domestique (11A), un message de demande d'enregistrement qui contient l'identité d'abonné de l'abonné.

5. Procédé selon la revendication 4,
une identité de mobilité de l'abonné étant dérivée de l'identité d'abonné contenue dans le message de demande d'enregistrement selon une fonction de dérivation configurable.

6. Procédé selon la revendication 4,
une identité de mobilité de l'abonné étant dérivée d'une identité d'abonné contenue dans le message de demande d'enregistrement et d'une identité de session de l'abonné selon une fonction de dérivation configurable.

7. Procédé selon la revendication 3,
l'identité de session étant formée par une identité de facturation de l'abonné.

8. Procédé selon la revendication 1,
l'identité d'abonné extérieure étant formée par un identifiant d'accès au réseau.

9. Procédé selon la revendication 1,
l'identité d'abonné extérieure étant formée par un identifiant d'accès au réseau anonyme.

10. Procédé selon la revendication 1,
l'identité d'abonné extérieure étant formée par un identifiant d'accès au réseau pseudonyme sélectionné de manière spécifique à la session.

11. Procédé selon la revendication 1,
l'identité d'abonné extérieure étant formée par une valeur de fonction de Hash d'une identité de mobilité.

12. Procédé selon la revendication 1,
l'identité de mobilité étant formée par une valeur de fonction de Hash d'une identité d'abonné extérieure.

13. Procédé selon la revendication 1,
l'identité d'abonné étant formée par un terminal d'abonné mobile (1) ou par un client Proxy Mobile IP (6B) d'un réseau d'accès (4).

14. Procédé selon la revendication 1,
l'identité d'abonné générée étant modifiée par un client d'authentification (6C) ou un agent étranger (6A) d'un réseau d'accès (4).

15. Procédé selon la revendication 1,
le message d'authentification étant formé par un paquet de données dont les données de gestion contiennent l'identité d'abonné extérieure et dont les données utiles contiennent une identité d'abonné intérieure spécifique à l'abonné.

16. Procédé selon la revendication 14,
l'identité d'abonné intérieure étant formée par un nom d'abonné univoque.

17. Procédé selon la revendication 14,
l'identité d'abonné intérieure étant formée par un numéro de téléphone prédéfini.

18. Procédé selon la revendication 14,
l'identité d'abonné extérieure formant une adresse pour le routage du paquet de données vers le serveur d'authentification (11B).

19. Procédé selon la revendication 4,
le message de demande d'enregistrement étant formé par un paquet de données qui contient l'identité d'abonné extérieure et qui contient une adresse c/o actuelle attribuée à l'abonné.

20. Procédé selon la revendication 12,
le message de demande de clé étant formé par un paquet de données dont les données de gestion contiennent l'identité de mobilité.

21. Procédé selon la revendication 1 ou 14,
le réseau d'accès (4) étant formé par un réseau WiMax.

22. Serveur d'authentification pour la fourniture d'une clé de mobilité,
le serveur d'authentification (11B) extrayant, lors de la réception d'un message d'authentification transmis pendant un enregistrement d'un abonné dans un réseau, une identité d'abonné de l'abonné contenue dans ce message et générant une clé de mobilité correspondante qui est enregistrée avec l'identité d'abonné extraite respective,
le serveur d'authentification (11B) extrayant, lors d'une réception ultérieure d'un message de demande de clé transmis pendant un enregistrement d'un abonné, une identité de mobilité de l'abonné contenue dans ce message et cherchant une identité de mobilité qui puisse être dérivée de l'une des identités d'abonnés enregistrées dans le serveur d'authentification (11B) selon une fonction de dérivation configurable et
le serveur d'authentification (11B) fournissant, lorsqu'il trouve une identité de mobilité dérivée qui peut être associée à l'identité de mobilité extraite, la clé de mobilité générée correspondante enregistrée pour la protection cryptographique de messages de signalisation de mobilité de l'abonné enregistré.

23. Serveur d'authentification selon la revendication 22, l'identité d'abonné étant une identité d'abonné extérieure contenue dans des données de gestion du message d'authentification, qui est prévue pour le routage du message authentification vers le serveur d'authentification.

24. Serveur d'authentification selon la revendication 22, le serveur d'authentification étant prévu dans un réseau domestique de l'abonné.
